# FASCICULE DE BREVET EUROPEEN

(11) **EP 3 956 931 B1**
(45) Date de publication et mention de la délivrance du brevet: **14.06.2023**
(21) Numéro de dépôt: 20725863.3
(22) Date de dépôt: 10.03.2020
(51) Int. Cl.: H01M 10/052, H01M 10/613, H01M 10/625, H01M 10/647, H01M 10/0525, H01M 10/617, H01M 10/655, H01M 50/103, H01M 50/119, H01M 50/124

(54) **DISPOSITIF DE STOCKAGE À CELLULE ÉLECTROCHIMIQUE PRISMATIQUE À INSERTS DE DRAINAGE, ET BATTERIE ASSOCIÉE**
SPEICHERVORRICHTUNG MIT PRISMATISCHER ELEKTROCHEMISCHER ZELLE MIT DRAINAGEEINSÄTZEN UND ZUGEHÖRIGE BATTERIE
STORAGE DEVICE WITH PRISMATIC ELECTROCHEMICAL CELL WITH DRAINAGE INSERTS, AND ASSOCIATED BATTERY

(30) Priorité: 19.04.2019 FR 1904184
(43) Date de publication de la demande: 23.02.2022
(73) Titulaire: PSA Automobiles SA, 78300 Poissy (FR)
(72) Inventeur: SIMONETTI, Marco, 92110 CLICHY (FR); NSOUMBI, Michele, 75019 PARIS 19 (FR)
(86) Numéro de dépôt international: PCT/FR2020/050482
(87) Numéro de publication internationale: WO 2020/212671

(56) Documents cités:
- WO-A1-2010/012135
- DE-A1-102011 077 295
- US-A1- 2011 293 986
- US-A1- 2014 186 669
- US-A1- 2017 244 143

## Description

La présente invention revendique la priorité de la demande française 1904184 déposée le 19.04.2019.

### Domaine technique de l'invention

L'invention concerne les dispositifs de stockage d'énergie électrique à cellule(s) électrochimique(s) de type prismatique et comportant une partie active de type lithium-ion.

### Etat de la technique

Comme le sait l'homme de l'art, dans une cellule électrochimique de type lithium-ion se produisent des réactions électrochimiques convertissant une énergie chimique en une énergie électrique, selon un processus réversible. Ce type de cellule comprend une électrode positive poreuse, une électrode négative poreuse, un séparateur poreux, un électrolyte (de type liquide ou gel non aqueux), et des collecteurs de courant. L'électrode positive est généralement réalisée dans un oxyde de métal de transition lithié et l'électrode négative est généralement réalisée en graphite.

Une telle cellule électrochimique peut être conditionnée selon quatre principaux formats : cylindrique, pile bouton, prismatique et sachet souple (ou « pouch »). L'invention concerne plus spécifiquement les cellules électrochimiques de type prismatique, rigides et dans lesquelles la géométrie interne est dite « bobino-écrasée ». Dans ce type de cellule électrochimique les électrodes et le séparateur baignent dans l'électrolyte et sont disposés à plat, empilés les uns sur les autres, enroulés, puis écrasés. Les électrodes, le séparateur et l'électrolyte constituent une partie active (ou « jelly roll ») qui est le siège d'une partie majoritaire de la génération de chaleur de sa cellule électrochimique lors de chaque charge ou décharge.

Habituellement, cette partie active est logée dans une enveloppe de protection rigide, généralement en aluminium (embouti et soudé), avec interposition d'une enveloppe d'isolation électrique, par exemple en mylar. Cette enveloppe de protection comprend une paroi qui est placée contre un échangeur de chaleur que comprend son dispositif de stockage d'énergie électrique et qui est chargé d'évacuer des calories qui sont produites par chaque cellule électrochimique et transférées dans l'enveloppe de protection de cette dernière.

Ces calories (ou pertes thermiques) sont générées aussi bien lors de la charge que lors de la décharge, et ont au moins quatre origines : la perte ohmique (ou perte par effet Joule) manifestant thermiquement la résistance électrique s'opposant au passage d'un courant électrique, la chaleur entropique représentant la chaleur réversible due à la variation d'entropie des espèces lors des réactions électrochimiques qui se produisent au sein de la cellule, la chaleur liée au changement de phase (considérée comme négligeable par rapport aux deux contributions précédentes), et la chaleur due au gradient de concentration (également considérée comme négligeable par rapport aux deux premières contributions).

En raison de sa géométrie interne (bobino-écrasée) une cellule électrochimique prismatique présente une anisotropie thermique qui fait que sa conductivité thermique globale n'est pas égale dans toutes les directions de l'espace, et donc l'évacuation des calories qu'elle génère n'est pas la même dans toutes les directions de l'espace. Cette anisotropie thermique a deux origines principales : l'enroulement et l'écrasement de la partie active, et la présence dans la cellule électrochimique d'éléments qui dégradent la diffusion de la chaleur entre sa partie active et son enveloppe de protection.

Cette anisotropie thermique s'avère problématique car elle empêche une bonne maitrise de la température interne de la cellule électrochimique, ce qui peut accélérer son vieillissement et limiter ses performances. En effet, le refroidissement se fait par une paroi qui est placée contre l'échangeur de chaleur, ce qui induit un gradient de température dans la cellule électrochimique suivant la direction qui est perpendiculaire à cette paroi et suivant laquelle la conductivité thermique est faible (typiquement de l'ordre de 35 Wm-1K-1 alors que celle d'une enveloppe de protection en aluminium est de l'ordre de 220 Wm-1K-1).

On connait par exemple des documents de brevets US-A1-2014186669 ou US-A1-2011293986 des dispositifs de stockage d'énergie électrique selon le préambule de la revendication 1.

L'invention a donc notamment pour but d'améliorer la situation.

### Présentation de l'invention

Elle propose notamment à cet effet un dispositif de stockage d'énergie électrique comprenant :
- au moins une cellule électrochimique de stockage d'énergie électrique prismatique et comportant une partie active lithium-ion et logée dans une enveloppe de protection comprenant des premières parois réalisées dans un matériau ayant une première conductivité thermique et solidarisées à une seconde paroi, et
- un échangeur de chaleur contre lequel est placée la seconde paroi et chargé d'évacuer des calories produites par la cellule électrochimique et transférées dans l'enveloppe de protection.

Ce dispositif de stockage se caractérise par le fait que l'une au moins des premières parois comprend des inserts s'étendant jusqu'à la seconde paroi associée, présentant une seconde conductivité thermique supérieure à la première conductivité thermique, et chargés de drainer vers la seconde paroi les calories transférées dans leur première paroi.

On obtient ainsi un refroidissement beaucoup plus homogène de la cellule électrochimique et donc un gradient de température dans cette cellule électrochimique, suivant la direction perpendiculaire à la seconde paroi, beaucoup plus faible que dans une cellule électrochimique de l'art antérieur.

Le dispositif de stockage selon l'invention peut comporter d'autres caractéristiques qui peuvent être prises séparément ou en combinaison, et notamment :
- dans un premier mode de réalisation, chaque insert peut être logé dans un logement défini dans le matériau de sa première paroi ;
   + chaque insert peut avoir une section, dans un plan parallèle à la seconde paroi, qui a une forme présentant une largeur plus grande au voisinage d'une première face de sa première paroi, orientée vers la partie active de sa cellule électrochimique, qu'au voisinage d'une seconde face de sa première paroi, opposée à cette première face, afin d'encaisser une expansion volumique pendant une charge ou une décharge de cette cellule électrochimique ;
- dans un deuxième mode de réalisation, chaque insert peut être solidarisé fixement à une première face de sa première paroi qui est orientée vers la partie active de sa cellule électrochimique ;
- dans les premier et second modes de réalisation chaque insert peut être réalisé en graphite ;
- dans un troisième mode de réalisation, chaque insert peut être réalisé dans un matériau à changement de phase, et logé dans un logement étanche défini dans le matériau de sa première paroi ;
- chaque cellule électrochimique peut comprendre une enveloppe d'isolation électrique interposée entre sa partie active et son enveloppe de protection ;
- il peut comprendre au moins deux cellules électrochimiques couplées en série et/ou en parallèle et comportant chacune une seconde paroi placée contre l'échangeur de chaleur.

L'invention propose également une batterie rechargeable comprenant au moins un dispositif de stockage d'énergie électrique du type de celui présenté ci-avant.

L'invention propose également un véhicule, éventuellement de type automobile, et comprenant au moins un dispositif de stockage d'énergie électrique du type de celui présenté ci-avant et/ou au moins une batterie rechargeable du type de celle présentée ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue en coupe dans un plan YZ, un exemple de réalisation d'un dispositif de stockage d'énergie électrique selon l'invention,
[Fig. 2] illustre schématiquement, dans une vue en perspective, les principaux composants d'une cellule électrochimique prismatique d'un dispositif de stockage d'énergie électrique selon l'invention, avant assemblage,
[Fig. 3] illustre schématiquement, dans une vue en coupe dans un plan XY, un premier exemple de réalisation d'une enveloppe de protection logeant une partie active d'une cellule électrochimique prismatique d'un dispositif de stockage d'énergie électrique selon l'invention, et
[Fig. 4] illustre schématiquement, dans une vue en coupe dans un plan XY, un second exemple de réalisation d'une enveloppe de protection logeant une partie active d'une cellule électrochimique prismatique d'un dispositif de stockage d'énergie électrique selon l'invention.

### Description détaillée de l'invention

L'invention a notamment pour but de proposer un dispositif de stockage d'énergie électrique DS à cellule(s) électrochimique(s) CE, de type prismatique et comportant une partie active PA de type lithium-ion (ou Li-ion), et à drainage de calories vers son échangeur de chaleur EC.

Dans ce qui suit, on considère, à titre d'exemple non limitatif, que le dispositif de stockage d'énergie électrique DS est destiné à équiper une batterie rechargeable, dans laquelle elle peut, éventuellement, être couplée à au moins un autre dispositif de stockage d'énergie électrique DS, en série et/ou en parallèle. Mais l'invention n'est pas limitée à cette application. En effet, un dispositif de stockage d'énergie électrique DS, selon l'invention, peut constituer une batterie rechargeable.

Par ailleurs, on considère dans ce qui suit, à titre d'exemple non limitatif, que la batterie rechargeable est destinée à équiper un véhicule de type automobile, comme par exemple une voiture. Mais l'invention n'est pas limitée à cette application. En effet, une batterie rechargeable, comportant au moins un dispositif de stockage d'énergie électrique DS, peut équiper n'importe quel système, appareil, installation (y compris industrielle), bâtiment (public ou privé), ou espace extérieur (public ou privé). Ainsi, la batterie rechargeable peut notamment équiper n'importe quel type de véhicule (terrestre, maritime (ou fluvial), ou aérien). On notera qu'au moins un véhicule peut comporter au moins un dispositif de stockage d'énergie électrique DS selon l'invention et/ou au moins une batterie rechargeable (comportant au moins un dispositif de stockage d'énergie électrique DS).

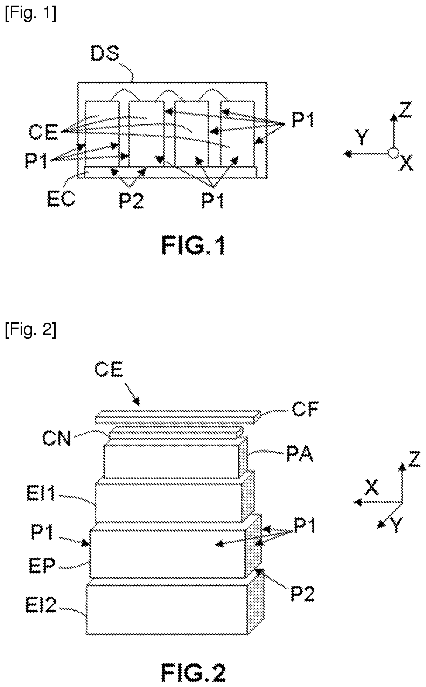

On a schématiquement représenté sur la figure 1 un exemple de réalisation d'un dispositif de stockage d'énergie électrique DS selon l'invention.

Comme illustré sur la figure 1, un dispositif de stockage d'énergie électrique DS, selon l'invention, comprend au moins une cellule électrochimique CE de stockage d'énergie électrique de type prismatique et un échangeur de chaleur EC. Dans l'exemple illustré non limitativement sur la figure 1, le dispositif de stockage d'énergie électrique DS comprend quatre cellules électrochimiques CE de type prismatique et couplées en série. Mais un dispositif de stockage d'énergie électrique DS, selon l'invention, peut comprendre n'importe quel nombre de cellules électrochimiques CE prismatiques supérieur ou égal à un (1). Par ailleurs, lorsque le dispositif de stockage d'énergie électrique DS comprend plusieurs cellules électrochimiques CE prismatiques, ces dernières (CE) peuvent être couplées entre elles en série et/ou en parallèle et sont toutes placées contre l'échangeur de chaleur EC.

Comme illustré sur la figure 2, une cellule électrochimique CE prismatique comprend au moins une partie active PA de type lithium-ion et logée dans une enveloppe de protection EP.

Bien que cela n'apparaisse pas sur la figure 2, la partie active PA comprend une électrode positive poreuse, une électrode négative poreuse, un séparateur poreux, un électrolyte (de type liquide ou gel non aqueux), et des collecteurs de courant. Par exemple, l'électrode positive peut être réalisée dans un oxyde de métal de transition lithié et l'électrode négative peut être réalisée en graphite.

Cette partie active PA a une géométrie interne de type bobino-écrasé, bien connue de l'homme de l'art et non apparente ici. La direction d'enroulement, qui est ici parallèle au grand côté (ou longueur) de la partie active PA, est la direction X, la direction perpendiculaire à la direction d'enroulement, qui est ici parallèle au petit côté (ou largeur) de la partie active PA, est la direction Y, et la direction Z est perpendiculaire aux directions X et Y.

L'enveloppe de protection EP comprend des premières parois P1 qui sont réalisées dans un matériau ayant une première conductivité thermique c1 et solidarisées à une seconde paroi P2. Par exemple, ce matériau est un aluminium. La seconde paroi P2 est définie dans le plan XY et est placée contre (ici sur) l'échangeur de chaleur EC de son dispositif de stockage (d'énergie électrique) DS. Par ailleurs, la seconde paroi P2 est de préférence réalisée dans le même matériau que les premières parois P1 qui sont solidarisées fixement à elle (P2). Par conséquent, elle (P2) est, par exemple, en aluminium. Les premières parois P1 sont perpendiculaires à la seconde paroi P2 et donc placées dans les plans XZ et YZ. Par ailleurs, chaque première paroi P1 comprend une première face (interne) F1 qui est orientée vers la partie active PA de sa cellule électrochimique CE, et une seconde face (externe) F2 opposée à sa première face F1.

L'échangeur de chaleur EC est chargé d'évacuer des calories qui sont produites par la (chaque) cellule électrochimique CE et transférées dans l'enveloppe de protection EP de cette dernière (CE). Il comporte, par exemple, au moins un circuit, éventuellement défini par deux plaques ou par au moins un caloduc, et dans lequel circule un fluide de refroidissement.

On notera, comme illustré non limitativement sur la figure 2, qu'une cellule électrochimique CE prismatique peut comprendre des composants supplémentaires. Ainsi, elle peut comprendre une première enveloppe d'isolation électrique EI1, par exemple en mylar, logeant sa partie active PA (et donc interposée entre cette dernière (PA) et son enveloppe de protection rigide EP). Elle peut aussi comprendre une seconde enveloppe d'isolation électrique E12, par exemple en poly-méthacrylate de méthyle (ou PMMA), et logeant son enveloppe de protection rigide EP. Elle peut aussi, éventuellement, comprendre un connecteur CN placé au contact des collecteurs de courant de sa partie active PA. Elle peut aussi, éventuellement, comprendre un couvercle CF destiné à être placé après le connecteur CN et refermant son enveloppe de protection (rigide) EP et sa seconde enveloppe d'isolation électrique E12.

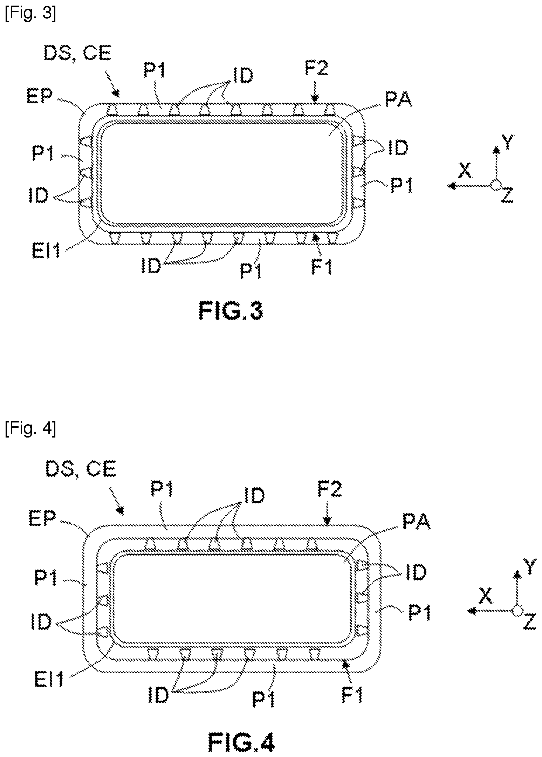

Selon l'invention, et comme illustré partiellement et non limitativement sur les figures 3 et 4, l'une au moins des premières parois P1 (et de préférence toutes comme illustré) comprend des inserts ID qui s'étendent jusqu'à la seconde paroi P2 et donc suivant la direction Z (ici verticale). Chaque insert ID présente une seconde conductivité thermique c2, qui est supérieure (et de préférence très supérieure) à la première conductivité thermique c1 du matériau dans lequel est constituée l'enveloppe de protection EP, et est chargé de drainer vers la seconde paroi P2 les calories qui ont été transférées dans sa première paroi P1.

Par exemple, la seconde conductivité thermique c2 peut être au moins de 2 à 10 fois plus grande que la première conductivité thermique c1.

Grâce à cette haute conductivité thermique des inserts ID, les calories sont beaucoup plus facilement captées par ces derniers (ID) que par le matériau des premières parois P1, et donc peuvent être beaucoup plus rapidement et efficacement transférées (par drainage) dans la seconde paroi P2 qui est placée contre l'échangeur de chaleur EC. Il en résulte un refroidissement beaucoup plus homogène de la (chaque) cellule électrochimique CE et donc un gradient de température dans la (chaque) cellule électrochimique CE suivant la direction Z beaucoup plus faible que dans une cellule électrochimique de l'art antérieur. Par conséquent, on réduit notablement l'anisotropie thermique, ce qui permet d'augmenter notablement la durée de vie de la (chaque) cellule électrochimique CE, tout en améliorant son fonctionnement. Par ailleurs, la présence des inserts ID ne modifie pas la densité énergétique par unité de volume de la cellule électrochimique CE. De plus, le drainage permet également d'améliorer la conductivité thermique de l'enveloppe de protection EP suivant les directions X et Y.

Au moins trois modes de réalisation de l'enveloppe de protection EP peuvent être envisagés.

Dans un premier mode de réalisation illustré sur la figure 3, chaque insert ID peut être logé dans un logement qui lui est propre et qui est défini dans le matériau de sa première paroi P1. Pour ce faire, on peut, par exemple, créer (par enlèvement de matière) chaque logement d'insert ID dans l'épaisseur de matière de la paroi P1 avant que cette dernière (P1) ne soit coupée/pliée/soudée pour former l'enveloppe de protection EP.

Par exemple, chaque insert ID peut avoir une section, dans un plan XY parallèle à la seconde paroi P2, dont la forme présente une largeur qui est plus grande au voisinage de la première face F1 de sa première paroi P1 (orientée vers la partie active PA de sa cellule électrochimique CE) qu'au voisinage de la seconde face F2 de cette première paroi P1, afin d'encaisser une expansion volumique pendant une charge ou une décharge de cette cellule électrochimique CE. Cette option est destinée à garantir l'étanchéité de l'enveloppe de protection rigide EP en présence d'une variation de pression interne. De plus, ce premier mode de réalisation permet de ne pas modifier les dimensions de la cellule électrochimique CE, puisque les inserts ID sont intégrés dans l'épaisseur de l'enveloppe de protection rigide EP en s'étendant suivant la direction Z.

Dans l'exemple illustré non limitativement sur la figure 3, les inserts ID ont une section dans le plan XY qui est trapézoïdale, avec le grand côté situé au voisinage de la première face F1 et le petit côté (parallèle au grand côté) situé au voisinage de la seconde face F2. Mais d'autres formes peuvent être envisagées dès lors que leur largeur est plus grande au voisinage de la première face F1 qu'au voisinage de la seconde face F2. Par exemple, le côté ayant la plus grande largeur (situé au voisinage de la première face F1) peut être arrondi et/ou le côté ayant la plus petite largeur (situé au voisinage de la seconde face F2) peut être pointu (ou anguleux).

Dans un deuxième mode de réalisation illustré sur la figure 4, chaque insert ID peut être solidarisé fixement à la première face F1 de sa première paroi P1 (orientée vers la partie active PA de sa cellule électrochimique CE).

Dans l'exemple illustré non limitativement sur la figure 4, les inserts ID ont une section dans le plan XY qui est trapézoïdale, avec un grand côté orienté vers la partie active PA et un petit côté (parallèle au grand côté) solidarisé fixement à la première face F1. Mais d'autres formes peuvent être envisagées dès lors que leur largeur est plus petite au voisinage de la première face F1 qu'en regard de la partie active PA.

Par exemple, dans les premier et deuxième modes de réalisation chaque insert ID peut être réalisé en graphite. Mais il pourrait aussi être réalisé en graphène ou en cuivre, par exemple.

Dans un troisième mode de réalisation (non illustré), chaque insert ID peut être réalisé dans un matériau à changement de phase (de solide à liquide). En phase liquide ce matériau présente une seconde conductivité thermique c2 qui est très supérieure à celle qu'il présente dans sa phase solide, et aussi très supérieure à la première conductivité thermique c1. De plus, le changement de phase permet d'emmagasiner de l'énergie et donc ne pas avoir à trop réchauffer la cellule électrochimique CE car il se produit à température constante. Dans ce cas, chaque insert ID est logé dans un logement étanche qui est défini dans le matériau de sa première paroi P1.

Chaque logement peut, par exemple, être créé par enlèvement de matière dans l'épaisseur de la paroi P1 avant que cette dernière (P1) ne soit coupée/pliée/soudée pour former l'enveloppe de protection EP.

Ici, c'est la chaleur latente du changement de phase qui permet d'augmenter très notablement la quantité de calories qui est absorbée par l'enveloppe de protection rigide EP et transférée vers la seconde paroi P2.

Par exemple, ce matériau à changement de phase peut être un composé minéral (ou inorganique) comme un sel hydraté. Ce dernier peut être issu d'un alliage de sels organiques et d'eau et a l'avantage de posséder une grande chaleur latente, si bien que le matériau peut stocker ou céder de l'énergie par simple changement d'état tout en conservant une température constante, celle du changement d'état.

Ce troisième mode de réalisation permet de ne pas modifier les dimensions de la cellule électrochimique CE, puisque les inserts ID sont intégrés dans l'épaisseur de l'enveloppe de protection rigide EP en s'étendant suivant la direction Z.

On notera que compte tenu de l'important gain apporté par l'invention en matière de transfert de calories vers l'échangeur de chaleur EC, on peut envisager de réduire les performances de refroidissement de l'échangeur de chaleur EC.

## Revendications

1. Dispositif (DS) de stockage d'énergie électrique, comprenant i) au moins une cellule électrochimique (CE) de stockage d'énergie électrique prismatique et comportant une partie active (PA) lithium-ion et logée dans une enveloppe de protection (EP) comprenant des premières parois (P1) réalisées dans un matériau ayant une première conductivité thermique et solidarisées à une seconde paroi (P2), et ii) un échangeur de chaleur (EC) contre lequel est placée ladite seconde paroi (P2) et chargé d'évacuer des calories produites par ladite cellule électrochimique (CE) et transférées dans ladite enveloppe de protection (EP), **caractérisé en ce que** l'une au moins desdites premières parois (P1) comprend des inserts (ID) s'étendant jusqu'à ladite seconde paroi (P2), présentant une seconde conductivité thermique supérieure à ladite première conductivité thermique, et chargés de drainer vers ladite seconde paroi (P2) lesdites calories transférées dans leur première paroi (P1).

2. Dispositif selon la revendication 1, **caractérisé en ce que** chaque insert (ID) est logé dans un logement défini dans ledit matériau de sa première paroi (P1).

3. Dispositif selon la revendication 2, **caractérisé en ce que** chaque insert (ID) a une section, dans un plan parallèle à ladite seconde paroi (P2), ayant une forme présentant une largeur plus grande au voisinage d'une première face (F1) de sa première paroi (P1) qui est orientée vers ladite partie active (PA) de sa cellule électrochimique (CE) qu'au voisinage d'une seconde face (F2) de sa première paroi (P1), opposée à ladite première face (F1), afin d'encaisser une expansion volumique pendant une charge ou une décharge de cette cellule électrochimique (CE).

4. Dispositif selon la revendication 1, **caractérisé en ce que** chaque insert (ID) est solidarisé fixement à une première face (F1) de sa première paroi (P1) qui est orientée vers ladite partie active (PA) de sa cellule électrochimique (CE).

5. Dispositif selon l'une des revendications 2 à 4, **caractérisé en ce que** chaque insert (ID) est réalisé en graphite.

6. Dispositif selon la revendication 1, **caractérisé en ce que** chaque insert (ID) est réalisé dans un matériau à changement de phase, et logé dans un logement étanche défini dans ledit matériau de sa première paroi (P1).

7. Dispositif selon l'une des revendications 1 à 6, **caractérisé en ce que** chaque cellule électrochimique (CE) comprend une enveloppe d'isolation électrique (EI1) interposée entre sa partie active (PA) et son enveloppe de protection (EP).

8. Dispositif selon l'une des revendications 1 à 7, **caractérisé en ce qu'**il comprend au moins deux cellules électrochimiques (CE) couplées en série et/ou en parallèle et comportant chacune une seconde paroi (P2) placée contre ledit échangeur de chaleur (EC).

9. Batterie rechargeable, **caractérisée en ce qu'**elle comprend au moins un dispositif de stockage d'énergie électrique (DS) selon l'une des revendications précédentes.

10. Véhicule, **caractérisé en ce qu'**il comprend au moins un dispositif de stockage d'énergie électrique (DS) selon l'une des revendications 1 à 8 et/ou au moins une batterie rechargeable selon la revendication 9.

## Patentansprüche

1. Vorrichtung (DS) zum Speichern elektrischer Energie, umfassend i) mindestens eine elektrochemische Zelle (CE) zum Speichern prismatischer elektrischer Energie und umfassend einen Lithium-Ionen-Aktivteil (PA) und in einem Schutzgehäuse (EP) untergebracht, das erste Wände (P1) umfasst, die aus einem Material mit einem ersten thermischen Widerstand hergestellt sind Wärmeleitfähigkeit und an einer zweiten Wand (P2) befestigt ist, und ii) einen Wärmetauscher (EC), an dem die zweite Wand (P2) angeordnet ist und dafür verantwortlich ist, von der elektrochemischen Zelle (CE) erzeugte und in die Schutzhülle ( EP), **dadurch gekennzeichnet, dass** mindestens eine der ersten Wände (P1) Einsätze (ID) umfasst, die sich bis zu der zweiten Wand (P2) erstrecken, eine zweite Wärmeleitfähigkeit haben, die höher ist als die erste Wärmeleitfähigkeit, und für das Abfließen zu dieser verantwortlich sind zweite Wand (P2) besagte Kalorien, die in ihre erste Wand (Pi) übertragen wurden.

2. Vorrichtung nach Anspruch 1, **dadurch gekennzeichnet, dass** jeder Einsatz (ID) in einer Aufnahme untergebracht ist, die in dem Material seiner ersten Wand (P1) definiert ist.

3. Vorrichtung nach Anspruch 2, **dadurch gekennzeichnet, dass** je der Einsatz (ID) in einer Ebene parallel zur zweiten Wand (P2) einen Querschnitt mit einer Form aufweist, die eine größere Breite in der Nähe einer ersten Seite (F1) seiner ersten Wand (P1) aufweist, die zu dem Wirkstoff orientiert ist Teil (PA) seiner elektrochemischen Zelle (CE) nur in der Nähe einer zweiten Seite (F2) seiner ersten Wand (P1), die der ersten Seite (F1) gegenüberliegt, um einer Volumenausdehnung während eines Ladevorgangs standzuhalten oder Entladen dieser elektrochemischen Zelle (EC).

4. Vorrichtung nach Anspruch 1, **dadurch gekennzeichnet, dass** jeder Einsatz (ID) fest an einer ersten Seite (F1) seiner ersten Wand (P1) befestigt ist, die auf den aktiven Teil (PA) seiner elektrochemischen Zelle (CE) gerichtet ist.

5. Vorrichtung nach einem der Ansprüche 2 bis 4, **dadurch gekennzeichnet, daß** jeder Einsatz (ID) aus Graphit besteht.

6. Vorrichtung nach Anspruch 1, **dadurch gekennzeichnet, dass** jeder Einsatz (ID) aus einem Phasenänderungsmaterial hergestellt und in einem abgedichteten Gehäuse untergebracht ist, das in dem Material seiner ersten Wand (P1) definiert ist.

7. Vorrichtung nach einem der Ansprüche 1 bis 6, **dadurch gekennzeichnet,dass** jede elektrochemische Zelle (CE) eine elektrisch isolierende Ummantelung(E1 I) umfasst, die zwischen ihrem aktiven Teil (PA) und ihrer Schutzummantelung(EP) angeordnet ist.

8. Vorrichtung nach einem der Ansprüche 1 bis 7, **dadurch gekennzeichnet, dass** sie mindestens zwei elektrochemische Zellen (CE) umfasst, die in Reihe und/oder parallel geschaltet sind und jeweils eine zweite Wand (P2) umfassen, die an dem Wärmetauscher (CE) angeordnet ist.

9. Akkumulator, **dadurch gekennzeichnet, dass** er mindestens einen elektrischen Energiespeicher (DS) nach einem der vorhergehenden Ansprüche umfasst.

10. Fahrzeug, **dadurch gekennzeichnet, dass** es mindestens einen elektrischen Energiespeicher (DS) nach einem der Ansprüche 1 bis 8 und/oder mindestens einen Akkumulator nach Anspruch 9 umfasst.

## Claims

1. Electric energy storage (DS). Including i) at least one electrochemical cell (CE) of storage of prismatic electrical energy and comprising an active part (PA) lithium-ion and housed in a protective envelope (EP) including the first walls (P1) made in a material Having a first thermal and solidized conductivity to a second wall (P2), and ii) a heat exchanger (EC) against which the said second wall (P2) is placed and responsible for evacuating calories produced by said electrochemical cell (CE) and transferred in said Protective envelope (EP), **characterized in that** one at least first walls (P1) includes inserts (ID) extending to said second wall (P2), with a second thermal conductivity greater than said the first thermal conductivity, and responsible for draining the said calories transferred to their first wall (P1) to the said second wall (P2).

2. Device according to claim 1, **characterized in that** each insert (ID) is housed in a housing defined in the said material of its first wall (P1).

3. Device according to claim 2, **characterized in that** each insert (ID) has a section, in a plan parallel to said second wall (P2), having a form presenting a larger width in the vicinity of a first side (F1) of its first wall (P1) which is oriented towards said Active part (PA) of its electrochemical cell (CE) that in the vicinity of a second face (F2) of its first wall (P1), opposed to said first face (F1), in order to take a volume expansion during a load or discharge from this electrochemical cell (CE).

4. Device according to claim 1, **characterized in that** each insert (ID) is fixedly solidized to a first side (F1) of its first wall (P1) which is oriented towards said active part (PA) of its electrochemical cell (CE).

5. Device according to one of claims 2 to 4, **characterized in that** each insert (ID) is made of graphite.

6. Device according to claim 1, **characterized in that** each insert (ID) is carried out in a phase change material, and housed in a waterproof housing defined in said material of its first wall (P1).

7. Device according to one of claims 1 to 6, **characterized in that** each electrochemical cell (CE) includes an electrical insulation envelope (EL I) interposed between its active part (PA) and its protective envelope (EP).

8. Device according to one of claims 1 to 7, **characterized in that** it includes at least two electrochemical cells (CE) coupled in series and/or in parallel and each comprising a second wall (P2) placed against said heat exchanger (EC).

9. Rechargeable battery, **characterized in that** it includes at least one electrical energy storage device (DS) according to one of the previous claims.

10. Vehicle, **characterized in that** it includes at least one electrical energy storage device (DS) according to one of the claims 1 to 8 and/or at least a rechargeable battery according to the claim 9.
